# EUROPÄISCHE PATENTSCHRIFT

(11) **EP 3 076 005 B1**
(45) Veröffentlichungstag und Bekanntmachung des Hinweises auf die Patenterteilung: **28.02.2018**
(21) Anmeldenummer: 16158243.2
(22) Anmeldetag: 02.03.2016
(51) Int. Cl.: F02M 65/00, F02M 57/00, G01L 9/00, G01L 23/10, G01L 19/14

(54) **KRAFTSTOFFINJEKTOR UND VERFAHREN ZUM HERSTELLEN EINES KRAFTSTOFFINJEKTORS**
FUEL INJECTOR AND METHOD FOR PRODUCING A FUEL INJECTOR
INJECTEUR DE CARBURANT ET PROCÉDÉ DE FABRICATION D'UN INJECTEUR DE CARBURANT

(30) Priorität: 02.04.2015 DE 102015206032
(43) Veröffentlichungstag der Anmeldung: 05.10.2016
(73) Patentinhaber: ROBERT BOSCH GMBH, 70442 Stuttgart (DE)
(72) Erfinder: Forke, Martin, 70499 Stuttgart (DE); Malt, Falko, 96120 Bischberg (DE)

(56) Entgegenhaltungen:
- EP-A1- 3 001 024
- EP-A1- 3 018 339
- EP-A1- 3 026 254
- EP-A2- 0 304 199
- WO-A2-2009/019663
- DE-A1- 4 234 290
- DE-A1- 19 813 756
- US-A- 3 603 152

## Beschreibung

### Stand der Technik

Die Erfindung betrifft einen Kraftstoffinjektor nach dem Oberbegriff des Anspruchs 1. Ferner betrifft die Erfindung ein Verfahren zum Herstellen eines erfindungsgemäßen Kraftstoffinjektors.
Ein Kraftstoffinjektor nach dem Oberbegriff des Anspruchs 1 ist aus der nachveröffentlichten DE 10 2014 222 811 A1 der Anmelderin und aus WO 2009/019663 A1 bekannt. Der bekannte Kraftstoffinjektor weist ein als Piezoelement ausgebildetes Sensorelement auf, das über eine Klebeverbindung am Grund einer Vertiefung aufliegt, wobei der Grund einen Verformungsbereich begrenzt, der zur zumindest mittelbaren Erfassung des Drucks in einem Hochdruckraum des Injektorgehäuses dient. Über die Erfassung des Drucks in dem Hochdruckraum des Injektorgehäuses lässt sich insbesondere der Schließzeitpunkt eines Einspritzglieds (Düsennadel) erfassen. Bei dem bekannten Kraftstoffinjektor ist darüber hinaus vorgesehen, mittels einer Stützeinrichtung, die auf der der Klebeverbindung gegenüberliegenden Stirnseite an einem Randbereich des Sensorelements aufliegt, eine axiale Vorspannkraft auf das Sensorelement zu erzeugen. Dadurch wird beim bekannten Stand der Technik die Zuverlässigkeit der Messeinrichtung erhöht, selbst wenn die Qualität der Klebeverbindung, insbesondere über die Lebensdauer des Kraftstoffinjektors betrachtet, nachlässt. Weiterhin ist es bei dem bekannten Kraftstoffinjektor vorgesehen, die Stützeinrichtung mittels einer vorzugsweise als Laserschweißnaht ausgebildeten Schweißnaht mit dem Injektorgehäuse zu verbinden. Das Ausbilden einer derartigen Laserschweißnaht ist insofern relativ aufwändig, als dass während des Ausbildens der Laserschweißnaht die Stützeinrichtung mit einer entsprechenden Axialkraft in Richtung des Sensorelements beaufschlagt werden muss. Aufgrund der Größe des Sensorelements bzw. der Abstützeinrichtung und deren Form ist das Ausbilden bzw. Anordnen einer zur Beaufschlagung der Abstützeinrichtung mit der Axialkraft erforderlichen Halteeinrichtung relativ aufwändig. Ferner ergibt sich beim Ausbilden der Laserschweißnaht eine zusätzliche thermische Belastung auf die Bauteile der Messeinrichtung.

### Offenbarung der Erfindung

Ausgehend von dem dargestellten Stand der Technik liegt der Erfindung die Aufgabe zugrunde, einen Kraftstoffinjektor nach dem Oberbegriff des Anspruchs 1 derart weiterzubilden, dass eine herstellungstechnisch vorteilhafte, die Bauteile der Messeinrichtung insbesondere thermisch wenig belastenden Montage der Messeinrichtung an dem Injektorgehäuse ermöglicht wird.

Diese Aufgabe wird erfindungsgemäß bei einem Kraftstoffinjektor mit den kennzeichnenden Merkmalen des Anspruchs 1 dadurch gelöst, dass ein Teilbereich des Injektorgehäuses zur Erzeugung der axialen Vorspannkraft deformiert und in Wirkverbindung mit der Messeinrichtung angeordnet ist.

Mit anderen Worten gesagt bedeutet dies, dass es erfindungsgemäß vorgesehen ist, anstelle einer Laserschweißnaht oder sonstigen Bauteilen wie der aus dem Stand der Technik bekannten Stützeinrichtung zur Erzeugung der axialen Vorspannkraft auf die Messeinrichtung die axiale Vorspannkraft durch eine bereichsweise Deformation des Injektorgehäuses zu erzeugen, wobei die Deformation derart ausgebildet ist, dass die in Richtung des Verformungsbereichs erforderliche axiale Vorspannkraft erzeugt wird. Unter Deformieren im Sinne der Erfindung wird insbesondere ein Verstemmen oder ähnlicher, spanloser Umformprozess mittels eines Werkzeugs verstanden, der einen Teil des metallischen Injektorgehäuses verformt, ohne Material des Injektorgehäuses zu entfernen. Ein derartiger Kraftstoffinjektor hat insbesondere den Vorteil, dass während der Deformation des Injektorgehäuses keine axiale Vorspannkraft auf das Sensorelement bzw. die Messeinrichtung durch eine externe zusätzliche Einrichtung wie beim eingangs erwähnten Stand der Technik erforderlich ist, sondern dass die axiale Vorspannkraft durch die Deformation des Teilbereichs des Injektorgehäuses selbst erzeugt wird.

Erfindungsgemäß ist es weiter vorgesehen, dass das Sensorelement in einer Vertiefung des Injektorgehäuses angeordnet ist, und dass ein die Vertiefung begrenzender Randbereich des Injektorgehäuses zumindest bereichsweise gegen einen Abschnitt der Messeinrichtung umgeformt ist. Eine derartige Ausbildung des Kraftstoffinjektors hat insbesondere den Vorteil, dass die Messeinrichtung das Injektorgehäuse in der Höhe nicht überragt, so dass die Baugröße des Kraftstoffinjektors gegenüber dem Stand der Technik bzw. einen Kraftstoffinjektor ohne eine Messeinrichtung nicht vergrößert ist.

Um die benötigte axiale Vorspannkraft auf das Sensorelement aufzubringen, ist es in Weiterbildung der Erfindung vorgesehen, dass die Messeinrichtung ein deckelförmiges Element aufweist, das auf der dem Verformungsbereich abgewandten Seite mit dem Sensorelement verbunden ist, und dass der Randbereich des Injektorgehäuses gegen das deckelförmige Element umgeformt ist. Es ist somit möglich, an sich bekannte Piezoelemente bzw. Sensorelemente zu verwenden, welche mit einem zusätzlichen deckelförmigen Element versehen werden, das dazu dient, die axialen Vorspannkräfte möglichst gleichmäßig auf das Sensorelement zu übertragen. Hierzu ist es insbesondere vorgesehen, dass das deckelförmige Element auf der dem Sensorelement zugewandten Seite vollflächig auf dem Sensorelement aufliegt, damit eine gleichmäßige Flächenpressung auf das Sensorelement erzeugt wird.

Um die axiale Vorspannkraft auf das Sensorelement zu begrenzen bzw. möglichst einfach einstellen zu können, ist es darüber hinaus in einer weiteren bevorzugten Ausgestaltung der Erfindung vorgesehen, dass die Vertiefung sacklochförmig ausgebildet ist und eine vorzugsweise radial umlaufende Schulter aufweist, gegen die die Messeinrichtung im Einbauzustand auf der dem Verformungsbereich zugewandten Seite zumindest bereichsweise anliegt. Eine derartige Ausbildung ermöglicht insbesondere die axiale Vorspannkraft zu begrenzen, da die maximale Vorspannkraft dann erreicht wird, wenn die Messeinrichtung an der Schulter aufliegt und eine weitere Verringerung des axialen Abstands zwischen dem deckelförmigen Element und dem Sensorelement bzw. dem Verformungsbereich dann nicht mehr möglich ist.

Um das Sensorelement vor dem Zutritt von aggressiven Medien wie Gasen oder Flüssigkeiten zu schützen, die insbesondere über die Lebensdauer des Kraftstoffinjektors zu Funktionsbeeinträchtigungen führen können, wird vorgeschlagen, dass das deckeiförmige Element die Vertiefung vollständig überdeckt, aus Kunststoff oder Blech besteht und Durchgangsöffnungen für Anschlussleitungen des Sensorelements aufweist. Unter einem vollständigen Überdecken im Sinne der Erfindung wird dabei verstanden, dass durch das deckeiförmige Element ggf. zwischen der Vertiefung und dem deckeiförmigen Element vorhandene Spalte oder ähnliches im Einbauzustand des deckeiförmigen Elements vollständig verschlossen bzw. abgedichtet werden. Darüber hinaus ist es insbesondere vorgesehen, dass die Durchgangsöffnungen für die Anschlussdrähte ebenfalls abgedichtet sind, um zu verhindern, dass über die Durchgangsöffnungen ein Zutritt von Medien in den Bereich des Sensorelements erfolgt.

In besonders einfacher und definierter Art und Weise lässt sich die axiale Vorspannkraft auf das Sensorelement erzeugen, wenn in unbelasteter Position des deckeiförmigen Elements dieses auf der dem Verformungsbereich abgewandten Stirnseite des Sensorelements aufliegt, wobei zwischen dem deckeiförmigen Element und der Schulter in der Vertiefung ein axialer Abstand ausgebildet ist. Dies hat zur Folge, dass beim Deformieren des Teilbereichs des Injektorgehäuses gegen das deckeiförmige Element dieses in Richtung der Schulter bewegt wird, bis es an der Schulter aufliegt. Der Bewegungshub wird dabei durch den Abstand zwischen dem deckeiförmigen Element und der Schulter im unbelasteten Zustand des deckeiförmigen Elements definiert und somit auch die maximal mögliche axiale Vorspannkraft begrenzt.

In weiterhin bevorzugter Ausgestaltung des Kraftstoffinjektors, bei der die axiale Vorspannkraft besonders zuverlässig und gleichmäßig auf das deckeiförmige Element bzw. das Sensorelement übertragen wird, wird vorgeschlagen, dass das deckeiförmige Element eine Schräge aufweist, gegen die ein Teilbereich des Injektorgehäuses anliegt.

Um einerseits die axiale Vorspannkraft von dem deckeiförmigen Element auf das Sensorelement zu übertragen, und andererseits bei einer Deformation des Verformungsbereichs die auf das Sensorelement wirkenden Druckspannungen zu begrenzen, ist es darüber hinaus von Vorteil, wenn das deckeiförmige Element zumindest bereichsweise elastisch deformierbar ausgebildet ist.

Die Erfindung umfasst auch ein Verfahren zur Herstellung eines soweit beschriebenen erfindungsgemäßen Kraftstoffinjektors, wobei das Verfahren zumindest die Schritte umfasst, zuerst eine Messeinrichtung mit einem Sensorelement zur Erfassung einer elastischen Verformung eines zumindest mittelbar mit einer Versorgungsbohrung oder einem Hochdruckraum in Wirkverbindung angeordneten Verformungsbereich in einer Vertiefung des Injektorgehäuses derart zu positionieren, dass das Sensorelement in Wirkverbindung mit dem Verformungsbereich angeordnet ist. Anschließend umfasst das erfindungsgemäße Verfahren den Schritt eines bereichsweisen Umformens des Injektorgehäuses gegen die Messeinrichtung, um eine in Richtung des Verformungsbereichs wirkende axiale Vorspannkraft auf das Sensorelement zu erzeugen.

In bevorzugter Ausgestaltung des erfindungsgemäßen Verfahrens ist es vorgesehen, dass das Umformen ein zumindest radiales Verdrängen von Material des Injektorgehäuses in Richtung der Vertiefung aufweist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte, teilweise geschnittene Seitenansicht eines erfindungsgemäßen Kraftstoffinjektors mit einer Messeinrichtung zur zumindest mittelbaren Erfassung des Kraftstoffdrucks im Kraftstoffinjektor und
- Fig. 2 und Fig. 3: einen Teilbereich des Kraftstoffinjektors im Bereich der Messeinrichtung während unterschiedlicher Phasen der Montage der Messeinrichtung in einer sacklochförmigen Vertiefung des Injektorgehäuses, jeweils im Längsschnitt.

Gleiche Elemente bzw. Elemente mit gleicher Funktion sind in den Figuren mit den gleichen Bezugsziffern versehen.

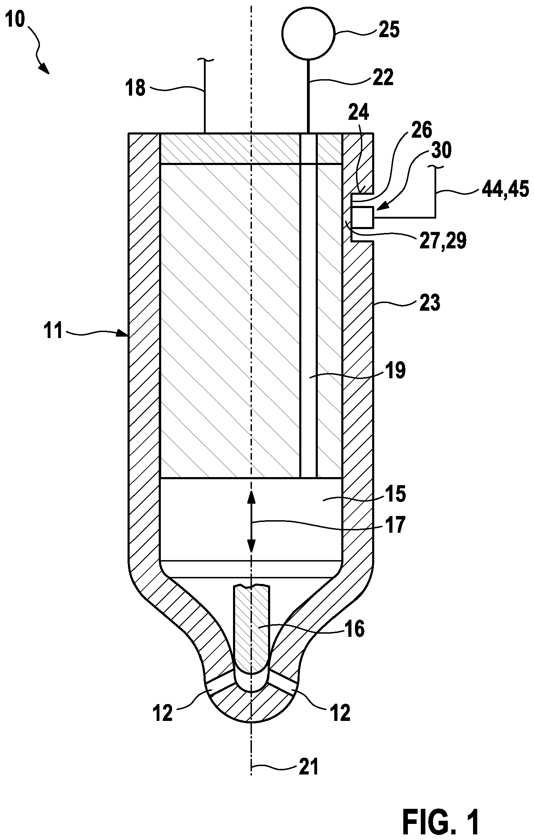

Der in der Fig. 1 stark vereinfacht dargestellte Kraftstoffinjektor 10 ist als sogenannter Common-Rail-Injektor ausgebildet, und dient dem Einspritzen von Kraftstoff in den nicht gezeigten Brennraum einer Brennkraftmaschine, insbesondere einer selbstzündenden Brennkraftmaschine.

Der Kraftstoffinjektor 10 weist ein im Wesentlichen aus Metall bestehendes, ggf. mehrteilig ausgebildetes Injektorgehäuse 11 auf, in dem auf der dem Brennraum der Brennkraftmaschine zugewandten Seite wenigstens eine, vorzugsweise mehrere Einspritzöffnungen 12 zum Einspritzen des Kraftstoffs eingeordnet sind. Innerhalb des Injektorgehäuses 11 bildet dieses einen Hochdruckraum 15 aus, in dem eine als Einspritzglied dienende Düsennadel 16 in Richtung des Doppelpfeils 17 hubbeweglich angeordnet ist. In der dargestellten, abgesenkten Stellung der Düsennadel 16 bildet diese zusammen mit der Innenwand des Hochdruckraums 15 bzw. des Injektorgehäuses 11 einen Dichtsitz aus, so dass die Einspritzöffnungen 12 zumindest mittelbar verschlossen sind, derart, dass das Einspritzen von Kraftstoff aus dem Hochdruckraum 15 in den Brennraum der Brennkraftmaschine vermieden wird. In der anderen, nicht dargestellten, von dem Dichtsitz abgehobenen Position der Düsennadel 16 gibt diese die Einspritzöffnungen 12 zum Einspritzen des Kraftstoffs in den Brennraum der Brennkraftmaschine frei. Die Bewegung der Düsennadel 16, insbesondere zum Freigeben der Einspritzöffnungen 12, erfolgt auf eine an sich bekannte Art und Weise mittels eines nicht dargestellten Aktuators, der über eine Spannungsversorgungsleitung 18 von einer Steuereinrichtung der Brennkraftmaschine ansteuerbar ist. Bei dem Aktuator kann es sich insbesondere um einen Magnetaktuator oder aber um einen Piezoaktuator handeln.

Die Versorgung des Hochdruckraums 15 mit unter Hochdruck (Systemdruck) stehendem Kraftstoff erfolgt über eine innerhalb des Injektorgehäuses 11 angeordnete bzw. in Bauteilen des Kraftstoffinjektors 10 ausgebildete Versorgungsbohrung 19, die insbesondere exzentrisch zur Längsachse 21 des Injektorgehäuses 11 in einem Randbereich des Kraftstoffinjektors 10, zumindest im Wesentlichen parallel zur Längsachse 21, verläuft. Die Versorgungsbohrung 19 ist darüber hinaus über einen nicht dargestellten Kraftstoffanschlussstutzen mit einer Kraftstoffleitung 22 verbunden, welche wiederum mit einem Kraftstoffspeicher 25 (Rail) gekoppelt ist.

In einem von den Einspritzöffnungen 12 bzw. dem Brennraum axial relativ weit beabstandeten Bereich des Injektorgehäuses 11 ist in dessen Außenwand 23 beispielhaft eine sacklochförmige Vertiefung 24 ausgebildet, so dass die Wanddicke des Injektorgehäuses 11 im Bereich der Vertiefung 24 reduziert ist. Ergänzend wird erwähnt, dass anstelle einer sacklochförmigen Vertiefung 24 das Injektorgehäuse 11 auch eine Abflachung aufweisen kann, in deren Bereich die Wanddicke des Injektorgehäuses 11 reduziert ist.

Der ebene ausgebildete Grund 26 der Vertiefung 24 bildet einen Teil eines Verformungsbereichs 27 aus. Auf der der Vertiefung 24 abgewandten Seite des Injektorgehäuses 11 ist das Injektorgehäuse 11 in Wirkverbindung mit der Versorgungsbohrung 19 angeordnet. Dadurch wirkt der in der Versorgungsbohrung 19 augenblicklich herrschende Kraftstoffdruck auch in dem Injektorgehäuse 11 auf der der Vertiefung 24 abgewandten Seite. Dadurch, dass die Wanddicke des Injektorgehäuses 11 im Bereich der Vertiefung 24 reduziert ist, wirkt der Wandabschnitt 29 des Injektorgehäuses 11 auf der der Vertiefung 24 zugewandten Seite als Verformungsbereich 27 in Art einer elastisch verformbaren Membran, wobei die Verformung, welche sich als Wölbung ausbildet, umso größer ist, je höher der augenblickliche Kraftstoffdruck in der Versorgungsbohrung 19 ist.

Zur Detektion des augenblicklichen Kraftstoffdrucks in der Versorgungsbohrung 19 und damit auch in dem Hochdruckraum 15, welcher als Indiz für die augenblickliche Stellung der Düsennadel 16 zur Ansteuerung der Düsennadel 16 verwendet wird, weist der Kraftstoffinjektor 10 eine Messeinrichtung 30 auf. Die Messeinrichtung 30 umfasst ein als Piezoelement 31 ausgebildetes Sensorelement 32.

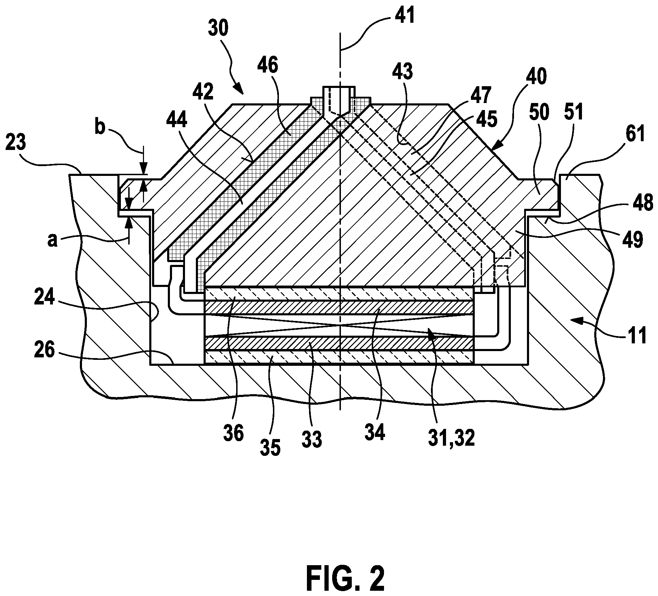

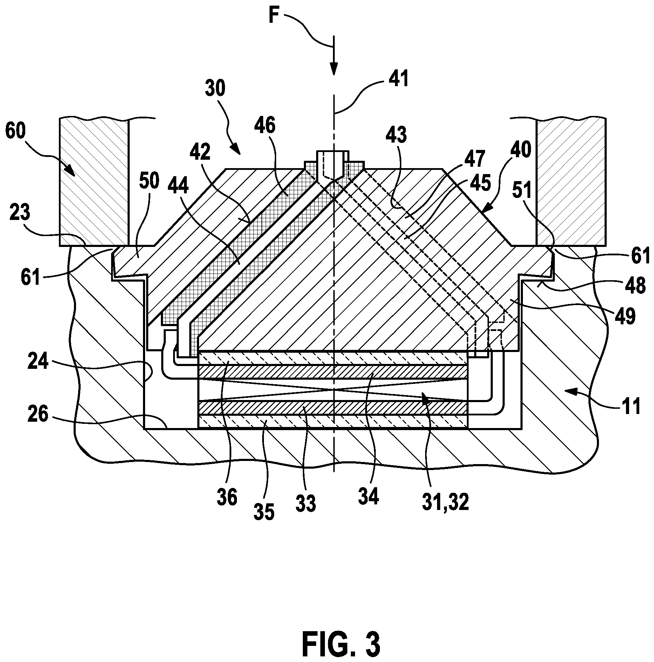

Das Piezoelement 31 weist entsprechend der Darstellung der Fig. 2 und 3 auf seinen gegenüberliegenden Stirnseiten jeweils eine Elektrodenschicht 33, 34 auf. Die Elektrodenschichten 33, 34 sind wiederum von jeweils einer Isolationsschicht 35, 36 vollständig überdeckt. Während die eine Isolationsschicht 35 vorzugsweise unmittelbar am Grund 26 der Vertiefung 24 anliegt, ist die andere Isolationsschicht 36 von einem scheiben- bzw. deckeiförmigen Element 40 überdeckt. Das vorzugsweise aus Kunststoff oder aus Blech bestehende Element 40, das bereichsweise in die Vertiefung 24 hineinragt und an seiner Oberseite kegelstumpfförmig ausgebildet ist, weist beispielhaft zwei in einem Winkel zu einer Längsachse 41 angeordnete Durchgangsöffnungen 42, 43 auf, in denen Anschlussdrähte 44, 45 geführt sind, welche wiederum auf gegenüberliegenden Seiten mit der jeweiligen Elektrodenschicht 33, 34 elektrisch verbunden sind. Über die Anschlussleitungen 44, 45, die vorzugsweise in den Durchführungen 42, 43 mit einer Vergussmasse 46, 47 umgeben sind, um einen Zutritt von Medien in Richtung des Sensorelements 32, zu vermeiden, werden bei einer Deformation des Verformungsbereichs 27 die von dem Piezoelement 31 erzeugten Spannungssignale einer Auswerteeinrichtung zugeführt.

Die Vertiefung 24 weist auf der dem Verformungsbereich 27 bzw. dem Grund 26 abgewandten Seite eine radial umlaufende Schulter 48 auf. Das im Wesentlichen zylindrisch bzw. rotationssymmetrisch zur Längsachse 41 (mit Ausnahme der Durchführungen 42, 43) ausgebildete Element 40 weist einen vorzugsweise mit lediglich geringem radialen Montagespiel zur Vertiefung 24 ausgebildeten Abschnitt 49 auf, der in den Bereich der Vertiefung 24 unterhalb der Schulter 48 in Richtung zum Verformungsbereich 27 hineinragt. Im Bereich der Schulter 48 weist das Element 40 einen flanschartig ausgebildeten, radial umlaufenden Befestigungsabschnitt 50 auf, der ebenfalls mit lediglich minimalem radialen Montagespiel im Bereich der Vertiefung 24 oberhalb der Schulter 48 angeordnet ist.

In dem in der Fig. 2 dargestellten Zustand der Messeinrichtung 30 liegt das Element 40 mit seiner dem Piezoelement 31 bzw. dem Sensorelement 32 zugewandten Unterseite auf dem Piezoelement 31 bzw. der Isolationsschicht 36 auf. Weiterhin erkennt man, dass zwischen der Unterseite des Befestigungsabschnitts 50 und der Schulter 48 ein Abstand a ausgebildet ist. Darüber hinaus ist zwischen der Oberseite des Befestigungsabschnitts 50 und der Außenwand 23 im Bereich der Vertiefung 24 ein Abstand b ausgebildet, d.h., dass der Befestigungsabschnitt 50 etwas unterhalb der Außenwand 23 verläuft. Der Befestigungsabschnitt 50 weist auf der der Außenwand 23 zugewandten Seite eine radial umlaufende Schräge 51 auf.

In der Fig. 2 ist der Zustand der Messeinrichtung 30 dargestellt, bei der die Messeinrichtung 30 zusammen mit dem Element 40 in der Vertiefung 24 montiert sind, derart, dass das Piezoelement 31 bzw. die Isolationsschicht 35 an dem Verformungsbereich 27 aufliegt. Anschließend wird zur Befestigung bzw. Erzeugung einer axialen Vorspannkraft F auf das Sensorelement 32 mittels einer in der Fig. 3 lediglich symbolisch dargestellten, beispielhaft hülsenförmigen Umformeinrichtung 60, insbesondere in Form eines Pressstempels oder ähnlichem, ein Teilbereich 61 des Injektorgehäuses 11 in Richtung des Elements 40, insbesondere in Richtung der Schräge 51 umgeformt bzw. deformiert. Die Deformation des Teilbereichs 61 bewirkt, dass der Teilbereich 61 zumindest in radialer Richtung gegen die Schräge 51 verdrängt wird und dabei gleichzeitig den Befestigungsabschnitt 50 zusammen mit dem Element 40 in Richtung des Verformungsbereichs 27 bewegt. Dabei wird durch Deformation des Elements 40 auf das Piezoelement 31 die gewünschte axiale Vorspannkraft F erzeugt. Dieser Zustand ist in der Fig. 3 dargestellt.

Der soweit beschriebene Kraftstoffinjektor 10 kann in vielfältiger Art und Weise abgewandelt bzw. modifiziert werden, ohne vom Erfindungsgedanken abzuweichen.

## Patentansprüche

1. Kraftstoffinjektor (10), insbesondere Common-Rail-Injektor, mit einem Injektorgehäuse (11), in dem ein Hochdruckraum (15) ausgebildet ist, der über eine im Injektorgehäuse (11) angeordnete Versorgungsbohrung (19) mit unter Druck stehendem Kraftstoff versorgbar ist, mit wenigstens einer zumindest mittelbar mit dem Hochdruckraum (15) verbundenen, im Injektorgehäuse (11) ausgebildeten Einspritzöffnung (12) zum Einspritzen von Kraftstoff in den Brennraum einer Brennkraftmaschine, mit einem die wenigstens eine Einspritzöffnung (12) freigebenden oder verschließenden Einspritzglied (16), und mit einer Messeinrichtung (30) zur zumindest mittelbaren Erfassung des Drucks im Hochdruckraum (15) oder der Versorgungsbohrung (19), wobei die Messeinrichtung (30) dazu ausgebildet ist, eine elastische Verformung eines zumindest mittelbar mit der Versorgungsbohrung (19) oder dem Hochdruckraum (15) in Wirkverbindung angeordneten Verformungsbereichs (27) zu erfassen, wobei die eine Längsachse (41) aufweisende Messeinrichtung (30) ein Sensorelement (32) aufweist, das mit der Oberfläche (26) des Verformungsbereichs (27) in Wirkverbindung angeordnet ist, und wobei das Sensorelement (32) unter einer in Richtung des Verformungsbereichs (27) gerichteten, axialen Vorspannkraft (F) in Wirkverbindung mit dem Injektorgehäuse (11) angeordnet ist, wobei das Sensorelement (32) in einer Vertiefung (24) des Injektorgehäuses (11) angeordnet ist,
**dadurch gekennzeichnet,**
**dass** ein Teilbereich (61) des Injektorgehäuses (11) zur Erzeugung der axialen Vorspannkraft (F) deformiert und in Wirkverbindung mit der Messeinrichtung (30) angeordnet ist, indem der Teilbereich (61) ein die Vertiefung (24) begrenzender Randbereich des Injektorgehäuses (11) ist, der zumindest bereichsweise gegen einen Abschnitt (51) der Messeinrichtung (30) umgeformt ist.

2. Kraftstoffinjektor nach Anspruch 1,
**dadurch gekennzeichnet,**
**dass** die Messeinrichtung (30) ein deckelförmiges Element (40) aufweist, das auf der dem Verformungsbereich (27) abgewandten Seite mit dem Sensorelement (32) verbunden ist, und dass der Teilbereich (61) des Injektorgehäuses (11) gegen das deckelförmige Element (40) umgeformt ist.

3. Kraftstoffinjektor nach Anspruch 1 oder 2,
**dadurch gekennzeichnet,**
**dass** die Vertiefung (24) sacklockförmig ausgebildet ist und eine vorzugsweise radial umlaufende Schulter (48) aufweist, gegen die die Messeinrichtung (30) im Einbauzustand auf der dem Verformungsbereich (27) zugewandten Seite zumindest bereichsweise anliegt.

4. Kraftstoffinjektor nach Anspruch 2 oder 3,
**dadurch gekennzeichnet,**
**dass** das deckelförmige Element (40) die Vertiefung (24) vollständig überdeckt, aus Kunststoff oder Blech besteht und Durchführungen (42, 43) für Anschlussleitungen (44, 45) des Sensorelements (32) aufweist.

5. Kraftstoffinjektor nach Anspruch 3 oder 4,
**dadurch gekennzeichnet,**
**dass** in unbelasteter Position des deckelförmigen Elements (40) dieses auf der dem Verformungsbereich (27) abgewandten Stirnseite mit dem Sensorelement (32) in Wirkverbindung angeordnet ist, und dass zwischen dem deckelförmigen Element (40) und der Schulter (48) ein axialer Abstand (a) ausgebildet ist.

6. Kraftstoffinjektor nach Anspruch 5,
**dadurch gekennzeichnet,**
**dass** das deckeiförmige Element (40) eine Schräge aufweist, der den Abschnitt (51) ausbildet, gegen den der Teilbereich (61) des Injektorgehäuses (11) anliegt.

7. Kraftstoffinjektor nach einem der Ansprüche 3 bis 6,
**dadurch gekennzeichnet,**
**dass** das deckelförmige Element (40) zumindest bereichsweise elastisch deformierbar ausgebildet ist.

8. Verfahren zur Herstellung eines Kraftstoffinjektors (10) nach einem der Ansprüche 1 bis 7, mit Positionieren einer Messeinrichtung (30) mit einem Sensorelement (32) zur Erfassung einer elastischen Verformung eines zumindest mittelbar mit einer Versorgungsbohrung (19) oder einem Hochdruckraum (15) in Wirkverbindung angeordneten Verformungsbereichs (27) in einer Vertiefung (24) des Injektorgehäuses (11) derart, dass das Sensorelement (32) in Wirkverbindung mit dem Verformungsbereich (27) angeordnet ist,
**gekennzeichnet dadurch, dass** das Verfahren zumindest folgenden Schritt umfasst:
- bereichsweises Umformen des Injektorgehäuses (11) gegen die Messeinrichtung (30), um eine in Richtung des Verformungsbereichs (27) wirkende axiale Vorspannkraft (F) auf das Sensorelement (32) zu erzeugen.

9. Verfahren nach Anspruch 8,
**dadurch gekennzeichnet,**
**dass** das Umformen ein zumindest radiales Verdrängen von Material des Injektorgehäuses (11) in Richtung der Vertiefung (24) umfasst.

## Claims

1. Fuel injector (10), in particular common-rail injector, having an injector housing (11) in which a high-pressure chamber (15) is formed which can be supplied with pressurized fuel via a supply bore (19) arranged in the injector housing (11), having at least one injection opening (12) which is connected at least indirectly to the high-pressure chamber (15) and which is formed in the injector housing (11) and which serves for the injection of fuel into the combustion chamber of an internal combustion engine, having an injection valve element (16) which opens up or closes off the at least one injection opening (12), and having a measuring device (30) for at least indirectly detecting the pressure in the high-pressure chamber (15) or in the supply bore (19), wherein the measuring device (30) is designed to detect an elastic deformation of a deformation region (27) which is arranged so as to be at least indirectly operatively connected to the supply bore (19) or to the high-pressure chamber (15), wherein the measuring device (30), which has a longitudinal axis (41), has a sensor element (32) which is operatively connected to the surface (26) of the deformation region (27), and wherein the sensor element (32) is arranged so as to be operatively connected to the injector housing (11) under an axial preload force (F) directed in the direction of the deformation region (27), wherein the sensor element (32) is arranged in a depression (24) of the injector housing (11),
**characterized**
**in that** a partial region (61) of the injector housing (11) is deformed in order to generate the axial preload force (F) and is arranged so as to be operatively connected to the measuring device (30) by virtue of the partial region (61) being an edge region, delimiting the depression (24), of the injector housing (11), which edge region is at least regionally deformed against a section (51) of the measuring device (30).

2. Fuel injector according to Claim 1,
**characterized**
**in that** the measuring device (30) has a cover-like element (40) which is connected, on the side averted from the deformation region (27), to the sensor element (32), and in that the partial region (61) of the injector housing (11) is deformed against the cover-like element (40).

3. Fuel injector according to Claim 1 or 2,
**characterized**
**in that** the depression (24) is formed in the manner of a blind bore and has a preferably radially encircling shoulder (48) against which the measuring device (30) bears at least regionally, on the side facing toward the deformation region (27), in the installed state.

4. Fuel injector according to Claim 2 or 3,
**characterized**
**in that** the cover-like element (40) completely covers the depression (24), is composed of plastic or sheet metal, and has leadthroughs (42, 43) for connection lines (44, 45) of the sensor element (32).

5. Fuel injector according to Claim 3 or 4,
**characterized**
**in that**, in the unloaded position of the cover-like element (40), the latter is arranged so as to be operatively connected, on the face side averted from the deformation region (27), to the sensor element (32), and in that an axial spacing (A) is formed between the cover-like element (40) and the shoulder (48).

6. Fuel injector according to Claim 5,
**characterized**
**in that** the cover-like element (40) has a bevel which forms the section (51) against which the partial region (61) of the injector housing (11) bears.

7. Fuel injector according to one of Claims 3 to 6,
**characterized**
**in that** the cover-like element (40) is formed so as to be at least regionally elastically deformable.

8. Method for producing a fuel injector (10) according to one of Claims 1 to 7, with positioning of a measuring device (30) with a sensor element (32) for detecting an elastic deformation of a deformation region (27), which is arranged so as to be at least indirectly operatively connected to a supply bore (19) or to a high-pressure chamber (15), in a depression (24) of the injector housing (11) such that the sensor element (32) is arranged so as to be operatively connected to the deformation region (27), **characterized in that** the method comprises at least the following step:
- regionally deforming the injector housing (11) against the measuring device (30) in order to generate an axial preload force (F), which acts in the direction of the deformation region (27), on the sensor element (32).

9. Method according to Claim 8,
**characterized**
**in that** the deformation comprises an at least radial displacement of material of the injector housing (11) in the direction of the depression (24).

## Revendications

1. Injecteur de carburant (10), notamment injecteur à rail commun, présentant
un boîtier d'injecteur (11) dans lequel est formée une chambre (15) à haute pression qui peut être alimentée en carburant mis sous pression, par un alésage d'alimentation (19) disposé dans le boîtier d'injecteur (11),
au moins une ouverture d'injection (12) formée dans le boîtier d'injecteur (11) et reliée au moins indirectement à la chambre (15) sous haute pression pour injecter du carburant dans la chambre de combustion d'un moteur à combustion interne,
un organe d'injection (16) qui libère ou ferme la ou les ouvertures d'injection (12) et
un dispositif de mesure (30) qui saisit de manière au moins indirecte la pression qui règne dans la chambre (15) sous haute pression ou dans l'alésage d'alimentation (19),
le dispositif de mesure (30) étant configuré pour saisir la déformation élastique d'une partie déformable (27) disposée de manière à coopérer au moins indirectement avec l'alésage d'alimentation (19) ou la chambre (15) sous haute pression,
le dispositif de mesure (30) présentant un axe longitudinal (41) étant doté d'un élément de capteur (32) disposé de manière à coopérer avec la surface (26) de la partie déformable (27),
l'élément de capteur (32) étant disposé de manière à coopérer avec le boîtier d'injecteur (11) sous une force axiale de précontrainte (F) orientée dans la direction de la partie déformable (27),
l'élément de capteur (32) étant disposé dans un creux (24) ménagé dans le boîtier d'injecteur (11), **caractérisé en ce que**
une partie (61) du boîtier d'injecteur (11) est déformée pour former la force de précontrainte axiale (F) et est disposée de manière à coopérer avec le dispositif de mesure (30) par le fait que la partie (61) est une bordure du boîtier d'injecteur (11) qui délimite le creux (24) et qu'au moins certaines de ses parties sont déformées contre une section (15) du dispositif de mesure (30).

2. Injecteur de carburant selon la revendication 1, **caractérisé en ce que** le dispositif de mesure (30) présente un élément (40) en forme de couvercle qui est relié à l'élément de capteur (32) sur son côté non tourné vers la partie déformable (27) et **en ce que** la partie (61) du boîtier d'injecteur (11) est déformée contre l'élément (40) en forme de couvercle.

3. Injecteur de carburant selon les revendications 1 ou 2, **caractérisé en ce que** le creux (24) a la forme d'un trou aveugle et présente un épaulement périphérique (48) de préférence radial contre lequel au moins par certaines parties du dispositif de mesure (30) reposent sur son côté tourné vers la partie déformable (27) en situation montée.

4. Injecteur de carburant selon les revendications 2 ou 3, **caractérisé en ce que** l'élément (40) en forme de couvercle recouvre complètement le creux (24), est réalisé en matière synthétique ou en tôle et présente des passages (42, 43) pour des conducteurs de raccordement (44, 45) de l'élément de capteur (32).

5. Injecteur de carburant selon les revendications 3 ou 4, **caractérisé en ce que** lorsque l'élément (40) en forme de couvercle est en position non chargée, il est disposé de manière à coopérer avec l'élément de capteur (32) sur le côté frontal non tourné vers la partie déformable (27) et **en ce qu'**un écart axial (a) est formé entre l'élément (40) en forme de couvercle et l'épaulement (48).

6. Injecteur de carburant selon la revendication 5, **caractérisé en ce que** l'élément (40) en forme de couvercle présente une rampe qui forme la section (51) contre laquelle la partie (61) du boîtier d'injecteur (11) repose.

7. Injecteur de carburant selon l'une des revendications 3 à 6, **caractérisé en ce qu'**au moins certaines parties de l'élément (40) en forme de couvercle sont élastiquement déformables.

8. Procédé de fabrication d'un injecteur de carburant (10) selon l'une des revendications 1 à 7 en positionnant dans un creux (24) du boîtier d'injecteur (11) un dispositif de mesure (30) doté d'un élément de capteur (32) qui saisit une déformation élastique d'une partie déformable (27) disposée de manière à coopérer au moins indirectement avec un alésage d'alimentation (19) ou une chambre (15) sous haute pression, de telle sorte que l'élément de capteur (32) soit disposé de manière à coopérer avec la partie déformable (27), **caractérisé en ce que** le procédé comporte au moins l'étape suivante :
- déformation de certaines parties du boîtier d'injecteur (11) contre le dispositif de mesure (30) pour appliquer sur l'élément de capteur (32) une force axiale de précontrainte (F) qui agit en direction de la partie déformable (27).

9. Procédé selon la revendication 8, **caractérisé en ce que** la déformation comporte un refoulement au moins radial du matériau du boîtier d'injecteur (11) en direction du creux (24).
